# EUROPEAN PATENT APPLICATION

(11) **EP 4 404 425 A1**
(43) Date of publication of application: **24.07.2024**
(21) Application number: 22868480.9
(22) Date of filing: 06.06.2022
(51) Int. Cl.: H02J 7/14, H02J 7/34, H02P 9/08, H02J 1/10

(54) **ELECTRIC SWITCHING SYSTEM AND METHOD FOR INITIALIZING SECONDARY SYSTEMS IN VEHICLES**

(30) Priority: 15.09.2021 BR 102021018346
(71) Applicant: Robert Bosch Limitada, CEP: 13065-900 - Campinas - SP (BR)
(72) Inventor: BOMBESSI, Antoni, 13186-534 Hortolandia, SP (BR); CARRARA, Francisco Henrique, 13070-140 Campinas, SP (BR); GAMA FRANCISCO, Luis Miguel, 13185-230 Hortolandia, SP (BR)
(74) Representative: Ström & Gulliksson AB
(86) International application number: PCT/BR2022/050202
(87) International publication number: WO 2023/039649

(57) **Abstract**

The present invention is related to an electrical switching system and method for initializing secondary systems in vehicles, such as air conditioning and ventilation systems, but not limited to this type of application, and which use at least one second alternator (3) without an extra battery, maintaining same electrically independent. Said method enables the use of a system with simple and robust electronics, which results in an improvement in the energy efficiency of the arrangement.

## Description

### FIELD OF INVENTION

The present invention is related to an electrical switching system and method for initializing secondary systems in vehicles, such as air conditioning and ventilation systems, but not limited to this type of application, and which use at least one second alternator without an extra battery, maintaining same electrically independent. Said method enables the use of a system with simple and robust electronics.

### BACKGROUND OF THE INVENTION

As is known, alternators (or electrical generators) are devices which are mechanically coupled to engines and are responsible for transforming mechanical energy into electrical energy.

In this manner, the alternator uses part of the energy that is available in the engine to carry out this conversion, there existing a small loss of available mechanical power for the vehicle, since the alternator is connected to the engine by belts, making the propeller work more and spend more fuel - in addition to the losses due to the construction of the alternator, particularly in the form of heat. Said characteristic causes the alternator to be considered an engine unit, to which it adds inertia in the working thereof (particularly when in slow gear).

The working of an alternator is based on the magnetic induction principle, set out by Michael Faraday (1791-1867), wherein an electrical conductor cuts the lines of force of a magnetic field, wherein there being a relative movement between them, an electromotive force is conducted on the terminals of this conductor. This conductor can be constructed on a winding forming a coil, and the terminals thereof connected to collector rings or slip rings at the end of the rotor shaft, which in turn are in contact with the brushes - where the rotor shaft is submitted to a permanent magnetic field.

The growing energy demand in vehicles is increasing substantially as new technologies and equipment make up a part of the automotive system, such as the electronic management of the engine, of the gear box, OBD components that are necessary for meeting the norms relative to emissions and several other functions related to safety, comfort and passenger entertainment, thus demanding a greater electrical energy supply capacity on the part of the vehicle.

In commercial vehicles the use of two or three alternators is common, working in parallel, so as to be able to increase the energy supply to the vehicle. In passenger transport buses, for example, it is essential to maintain the safety systems turned on and ready so that the sensors thereof ensure a response to avoid overturns, in addition to entertainment systems, electronic signs, internal lights, geolocation position systems and particularly air conditioning or HVAC (Heating, Ventilating and Air Conditioning) systems. Additionally, in Brazil it is extremely common for the municipalities and state governments to request changes in the configurations of buses during the validity of the service contracts, requiring excess electrical energy for the most varied functions.

However, the use of multiple alternators causes an electrical and mechanical unbalance, which nearly always results in wear and premature failure of one alternator relative to another. This is due to the fact that when they are working in parallel, one of the alternators will always act in its maximum generating power, while the secondary ones will act with the fluctuating demand of the system.

Additionally the use of aggregates increases the engine loading. When the combustion engine works with more load, the greater energy demand on the part of the aggregates causes the fuel consumption to increase and, consequently, the emission of polluting gases increases.

Aiming at reducing the effort provoked by the use of more than one alternator and using the energy lost in generating, there exist solutions which use secondary voltage sources to normalize the feeding of the system, thus avoiding voltage spikes, ripples, and overloads, inherent to applying multiple alternators. In this manner the use of batteries helps to maintain the voltage level, particularly in moments of slowdown, reducing the mechanical demand of the alternators to generate energy.

Another solution is the use of super capacitors, which have the same storage capacity as a battery, they load and unload the energy in a faster manner, thus meeting all the extra energy cycle generated and demanded.

Patent document US9190945 describes a voltage regulator system provided with an under-voltage protection circuit, used for batteryless secondary alternators or without any secondary voltage source, dedicated to auxiliary systems, such as for example an air conditioning system. Said system acts regulating the current which flows in the rotor coil and turning off if the same does not deliver sufficient voltage or if it is not possible to regulate the voltage, avoiding the overheating thereof. Further, the system uses a capacitive load used as a system filter, which acts to reduce electrical instability and improve the efficacy in generation.

It is observed that solutions aiming at electrical regulation in a system using multiple alternators, require power circuits for voltage rectification and current control, or they use secondary voltage sources to provide voltage and attenuate the demand of alternators to the combustion engine, causing the solution to be costly and demanding additional control systems.

Based on this scenario, aiming at optimizing the technical limitations observed and offer a more efficient and simplified solution, there arises the present invention.

### OBJECTIVES OF THE INVENTION

Thus, the present invention has as main purpose disclosing an electrical switching system and method for initializing secondary systems in vehicles, such as air conditioning and ventilation, but not limited to this type of application, which use at least one second alternator without extra battery.

Additionally, the purpose of the present invention is to provide an electrical switching system and method which, in a simplified manner, mitigates the electrical unbalance caused by the use of multiple alternators and, consequently the overloading between them, whereby in this manner they can be better dimensioned to meet the systems fed by them.

Further, the present invention has the purpose of disclosing a system and method which uses simplified and robust electronics and ensures that the alternators work with separate loads.

Moreover, it is a purpose of the present invention to present an electrical switching system and method which allows for less engine loading, since the systems related to each alternator work with a more efficient dimensioning, thus causing a reduction in polluting gases and fuel consumption.

### SUMMARY OF THE INVENTION

All the above cited purposes are achieved by means of the electrical switching system for initializing secondary systems in vehicles, comprising at least one first generator unit, at least one voltage source, at least one second voltage unit and at least one consumer unit, wherein the system is further comprised by: an electrical switch comprised of at least one switch element which electrically connects the voltage tension to at least one second generator unit when in "P1" position and electrically connects at least one second generator unit to at least one consumer unit control unit and at least one consumer unit in "P2" position.

According to the basic premises of the invention in question, the electrical switching system for initializing secondary systems in vehicles, further comprises the fact that the switch element is comprised of at least one electromechanical switch capable of establishing a selective electrical connection between at least a first electric terminal and at least an electric terminal in "P1 position" or between at least one electric terminal and at least one electric terminal in "P2 position".

Additionally, there is provided an electrical switching system for initializing secondary systems in vehicles comprised by the fact that the switch element undergoes change in position due to external force.

Moreover, in the present invention there is proposed a system which further comprises the fact that the switch element undergoes position change depending on at least one status signal.

Further, according to the present invention, the electrical switching system for initializing secondary systems in vehicles further comprises the fact that the switch element is comprised of a polarized transistor arrangement for electrically connecting a voltage source to at least one second generator unit related to a "P1" position and electrically connect at least one generator unit to at least one consumer unit in a "P2" position when polarized due to a status signal.

Additionally, in the present invention the system further comprises the fact that between the switch element and the voltage source there exists a protection unit in a series association.

In addition, the same purposes of the invention in question are also achieved by an electrical switching method for initializing secondary systems in vehicles comprised by the steps of: providing during the initialization of at least one first generator unit a voltage for ignition of at least one second generator unit, by at least one electrical switch comprised by at least one switch element which associates in a series at least one voltage source to at least one second generator unit when in a "P1" position, obtaining at least one status signal and changing the status of the switch element to a "P2" position when the status signal changes, associating in a series with at least one second generator unit to at least one consumer unit.

Further, also according to the present invention, the electrical switching method for initializing secondary systems in vehicles by the fact that when the status signal does not change, the status of the switch element remains in a "P1" position.

Further, the method proposed herein additionally comprises the fact that the status signal is associated with the stability and functioning of at least one second generator unit.

Finally, the present invention includes an electrical switching method for initializing secondary systems in vehicles which further comprises the fact that the status signal is associated with a timer.

### BRIEF DESCRIPTION OF THE FIGURES

The preferred embodiment of the invention in question is described in detail based on the listed figures, wherein:
Figure 1 illustrates an example of configuration using an electrical switching system for initializing secondary systems in vehicles.
Figure 2 illustrates the operating circuit of a configuration using an electrical switching system for initializing secondary systems in vehicles when in a "P1" position.
Figure 3 illustrates the operating circuit of a configuration using an electrical switching system for initializing secondary systems in vehicles when in a "P2" position.
Figure 4 illustrates a configuration when the switching element of an electrical switch is formed by a transistor arrangement.

### DETAILED DESCRIPTION OF THE INVENTION

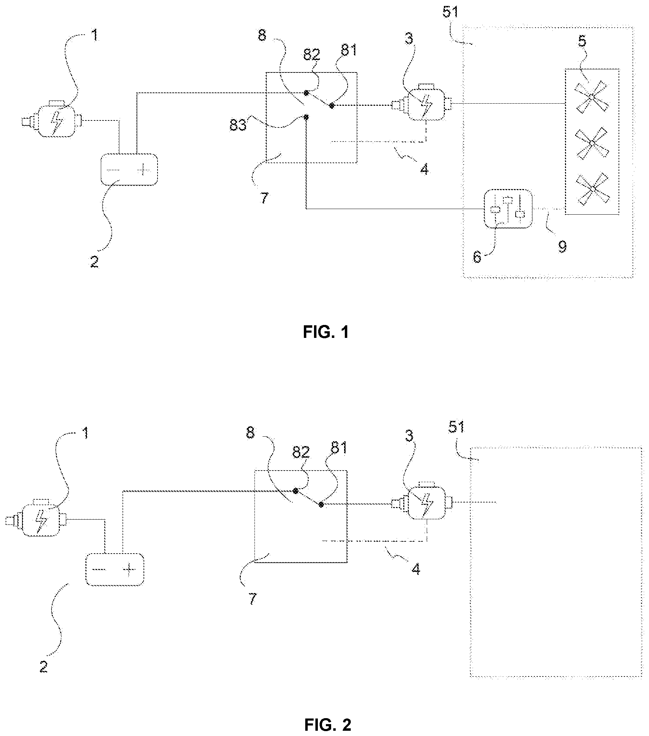

According to the general purposes of the invention in question, the electrical switching system for initializing secondary systems in vehicles, comprising: at least one first generator unit 1, at least one voltage source 2, at least one second generator unit 3 and at least one consumer unit 51, the system further comprising: an electrical switch 7 comprised of at least one switch element 8 which electrically connects the voltage source 2 to at least one second generator unit 3 when in a "P1" position and electrically connects to at least one second generator unit 3 to at least one consumer unit 51 when in a "P2" position. Figure 1 exemplifies in a simplified manner the electrical connection of the system, wherein there is the generator unit 1 and the voltage source making up part of the main energy generation, and generator unit 3 making the secondary energy generation for non-essential devices such as a consumer unit 51, exemplified by a load unit 5 and a control unit 6 (with the control unit commanding by means of a command signal 9 the load unit 5), with connection enabled by electrical switch 7.

Generator unit 1, commonly known as generator or alternator, is a device that is mechanically coupled to the engine of a system, which can be a passenger vehicle, a commercial vehicle (such as a bus) or any system which requires generating energy from mechanical effort and is responsible for transforming mechanical energy into electric power. Voltage source 2 is responsible for feeding the system, and can be the main battery of the vehicle, whereby it can be 12V, 24V or 48V (the two latter more common for buses), but can be any type of voltage source and of different electrical quantities, depending on the dimensioning and application in a certain system, and is responsible for providing voltage for engine ignition and of the generator units, in addition to feeding the working of the devices in the vehicle system.

Thus, electric switch 7 comprised of at least one switch element 8, electrically connects voltage source 2 to at least one second generator unit 3 when in a "P1" position. In this manner, electrical switch 7, by means of switch element 8, provides the necessary voltage to generator unit 3 from voltage source 2, acting to initiate this generator unit and when it is not stabilized, ensuring that generator unit 3 only provides power to at least one consumer unit 51 when it is stable, wherein the consumer unit 51 can be composed by a load unit 5 and a control unit 6 which can be exemplified as secondary system devices, such as condenser (air conditioner), different types of controls and peripherals, dimensioned to be fed by generator unit 3. Figure 2 exemplifies in a simplified manner the electrical connection when the electrical switch is in a "P1" position, ensuring voltage for initialization and, if necessary, stabilization of the generator unit 3.

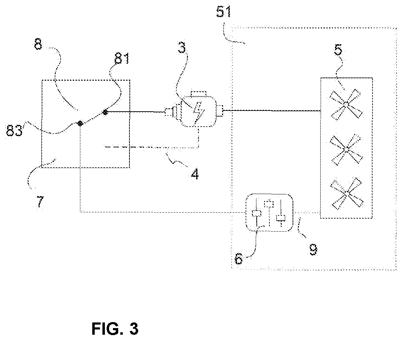

Additionally, the electrical switch 7 by means of switching unit 8, upon electrically connecting at least one second generator unit 3 to at least one control unit 6 when in "P2" position, ensures that the secondary systems indicated by consumer unit 51, are fed by generator unit 3, ensuring independence of generator unit 1 and consequently electrical stability - reducing noises which are intrinsic to the working of the alternators in parallel and avoiding that same operate unnecessarily at full load, since when in parallel, there is a tendency that one of them work at maximum load, and the secondary ones work generating energy for the load oscillations. Figure 3 exemplifies in a simplified manner the electrical connection when the electrical switch is in "P2" position, ensuring that the voltage generated by generator unit 3 is for feeding the secondary devices.

Further, in the present invention, the electrical switching system for initializing secondary systems in vehicles, switch element 8 further comprises at least one electromechanical key able to establish a selective electrical connection between at least one first electrical terminal 81 and at least one electrical terminal 82 in "P1 position" or between at least one electrical terminal 81 and at least one electrical terminal 83 in "P2 position". In this manner, switch element 8 such as an electromechanical key, for example a relay or any other element that is able to switch between contacts as from an electrical command, acts in a manner to connect a "common" terminal 81 to a terminal 82 or 83, related to "P1 position" or to "P2 position" which depending on the configuration can be normally open (NO) or normally closed (NC). Using the terminal 82 in an NC configuration makes the system safer, since it does not require a command to maintain generator unit 3 being fed by voltage unit 2 in case of device failure. In any case, this arbitrary denomination must not be interpreted imperviously, after all, the invention in question can be embodied with one or more switches or switching keys that are analogous to switch element 8 now defined.

Further, according to the present invention, the system is further comprised by the fact that the switch element 8 undergoes position changes due to external force. The electrical command can be from a signal which indicates stability of generator unit 3, or a timer programmed to give this signal after a fixed time which is considered the stability of generator unit 3 or it can also be from any unit provided with intelligence able to command the electrical switch 8 so as to ensure that it changes to "P2 position" only when the generator unit 3 is stable.

Moreover, the electrical switching system for initializing secondary systems in vehicles, further comprises the fact that the switch element 8 undergoes position change due to at least one status signal 4, which can come from terminal L of generator unit 3, or from any sensor coupled with same, which indicates that the generator unit 3 is stable.

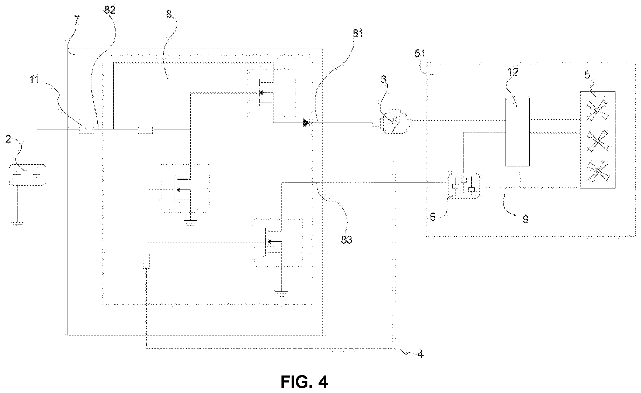

Further, according to the present invention, the electrical switching system for initializing secondary systems in vehicles further comprises the fact that the switch element 8 is comprised of a polarized transistor arrangement for electrically connecting a voltage source 2 to at least one second generator unit 3 related to a "P1" position and electrically connects at least one generator unit 3 to at least one consumer unit 51 in a "P2" position when polarized due to a status signal 4. Figure 4 exemplifies an electrical switching system wherein the switch element 8 is formed by three NPN transistors, or N-channel mosfet transistors, wherein a first transistor has in the emitter thereof terminal 81 (there may be a protection diode against reverse current), and the collector thereof and base associated with resistive elements such as voltage dividers and to the collector of a second NPN transistor with electrical connection to terminal 82 which is associated with a voltage source 2, which ensures that there is voltage between 82 and 81 (the second NPN transistor in cutoff); and between the second NPN transistor and the third NPN transistor associated by the base to a status signal 4 originating from the stability indication of generator unit 3, with both collectors to earth, and the collector of the third terminal in terminal 83 which is associated with the control unit 6, and thus, when there is status signal 4, two transistors polarize there being voltage between 81 and 83. This arrangement must not be interpreted imperviously considering that other transistor configurations with resistive and protective elements can materialize in an analogous manner the working and logic of the switch element 8 now defined.

Further, the system of the present invention further comprises the fact that between switch element 8 and voltage source 2 there is associated in a series a protective unit 11, which can be a fuse terminal or any device which interrupts the electricity communication to the switch element 8 in case of overload, avoiding that generator unit 3 be activated.

In addition, the same purposes of the invention in question are also achieved by an electrical switching method for initializing secondary systems in vehicles comprised by the steps of: providing during the initialization of at least one first generator unit 1 a voltage for ignition of at least one second generator unit 3, by at least one electrical switch 7 comprised by at least one switch element 8 which associates in a series at least one voltage source 2 to at least one second generator unit 3 when in a "P1" position, obtaining at least one status signal 4 and changing the status of the switch element 8 to a "P2" position when the status signal 4 changes, associated in a series with at least one second generator unit 3 to at least one consumer unit 51.

Upon providing during initialization of at least one first generator unit 1 a voltage for ignition of at least one second generator unit 3 by at least one electrical switch 7 comprised by at least one switch element 8 which associates in a series with at least one voltage source 2 to at least one second generator unit 3 when in a "P1" position, the method ensures that generator unit 3 receives the necessary voltage for initializing until the stabilization thereof and thus be in a position to provide energy to the devices for which it was dimensioned.

Thus, by obtaining at least one status signal 4, it is monitored when generator unit 3 presents stability and it is no longer necessary to feed with a voltage source. By changing the status of switch element 8 to a "P2" position when the status signal 4 changes, that is, depending on how this status signal 4 is configured to indicate that it is stable - there can be a signal of "high" or "low" according to what is being used to monitor generator unit 3 - the switch element associates in a series with at least one second generator unit 3 to at least one consumer unit 51, feeding the dependent devices for which it was designed. Consumer unit 51 can further be exemplified according to figure 4, formed by at least one control unit 6, which can be an air conditioner control, commands the temperature functions and, in some cases, commands the loads which are necessary for controlling the temperature by means of an action unit 12 comprised of control keys for activation and unloading of loads in a load unit 5 (by means of a command signal 9), but can also be any peripheral device which it is desired to feed to a vehicle or system.

Further, still according to the present invention, the electrical switching method for initializing secondary systems in vehicles comprises the fact that when the status signal 4 does not change, the status of the switch element 8 remains in a "P1" position. In this manner, the switch element maintains the "P1 position" while there is no stability for generator unit 3, whether it is due to mechanical unbalance or electrical overload, and thus voltage source 2 acts to stabilize the system and does not provide voltage to the devices which are designated to generator unit 3.

Additionally, the electrical switching method for initializing secondary systems in vehicles further comprises the fact that the status signal 4 is associated with stability and working of at least one second generator unit 3, which can originate from terminal L in the case of an alternator, or from any coupled sensor which indicates that generator unit 3 is stable.

It is worth citing that the electrical switching method for initializing secondary systems in vehicles further comprises the fact that the status signal 4 is associated with a timer. Thus, estimating an initialization time which stabilizes generator unit 3, the timer would play the role of changing the status of the switch element 8, and in a "blind" manner would assume that generator unit 3 would be stable.

Switch element 7 therefore, ensures that the main generator unit works electrically isolated from the secondary generator unit for most of the time, allowing an optimized dimensioning since the generator units do not work in parallel feeding the loads thereof, and thus reducing noise and oscillations, and consequently improving the mechanical balance and reducing the fuel consumption, making same up to five times more efficient than a conventional system. Further, by not working in parallel feeding the loads thereof, it is avoided that a generator unit work at its maximum load and thus reduces the losses, particularly in heat, thus increasing the lifespan and avoiding burning of the equipment.

It is important to highlight that the above description has the only purpose of describing in an exemplary manner the particular embodiment of the present utility model. Thus, it is clear that modifications, variations, and constructive combinations of the elements that carry out the same function in the same manner substantially to achieve the same results, continue within the scope of protection limited by the attached claims.

## Claims

1. Electrical switching system for initializing secondary systems in vehicles, comprising:
at least one generator unit (1);
at least one voltage source (2);
at least one second generator unit (3);
at least one consumer unit (51);
the system being **CHARACTERIZED by** the fact that it further comprises:
an electrical switch (7) comprised of at least one switch element (8) which electrically connects the voltage source (2) to at least one second generator unit (3) when in a "P1" position; and electrically connects at least one second generator unit (3) to at least one consumer unit (51) when in "P2" position,

2. Electrical switching system for initializing secondary systems in vehicles, according to claim 1, **CHARACTERIZED by** the fact that the switch element (8) comprises at least one electromechanical key able to establish a selective electrical connection between at least one first electrical terminal (81) and at least one electrical terminal (82) in "P1" position or between at least one electrical terminal (81) and at least one electrical terminal (83) in "P2" position.

3. Electrical switching system for initializing secondary systems in vehicles, according to claim 1 and 2, **CHARACTERIZED by** the fact that the switch element (8) undergoes position change due to external force.

4. Electrical switching system for initializing secondary systems in vehicles, according to claim 1 and 2, **CHARACTERIZED by** the fact that, the switch element (8) undergoes position change due to at least one status signal (4).

5. Electrical switching system for initializing secondary systems in vehicles, according to claim 1, **CHARACTERIZED by** the fact that the switch element (8) is comprised of a polarized transistor arrangement to electrically connect a voltage source (2) to at least one second generator unit (3) related to a "P1" position, and electrically connects at least one generator unit (3) to at least one second generator unit (3) related to a "P1" position and electrically connect at least one generator unit (3) to at least one control unit (6) and to at least one consumer unit (5) in a "P2" position when polarized due to a status signal (4).

6. Electrical switching system for initializing secondary systems in vehicles, according to claim 5, **CHARACTERIZED by** the fact that, between the switch element (8) and the voltage source (2), there is associated in a series a protection unit (11).

7. Electrical switching method for initializing secondary systems in vehicles **CHARACTERIZED by** the fact that it comprises the steps of:
i. providing, during initialization of at least one first generator unit (1) an ignition voltage of at least one second generator unit (3), by at least one electrical switch (7) comprised of at least one switch element (8) which associates in a series at least one voltage source (2) to at least one second generator unit (3) when in a "P1" position;
ii. obtaining at least one status signal (4);
iii. changing the status of switch element (8) to a "P2" position when the status signal (4) changes, associating in a series at least one second generator unit (3) to at least one consumer unit (51).

8. Electrical switching method for initializing secondary systems in vehicles according to claim 7, **CHARACTERIZED by** the fact that, when the status signal (4) does not change, the status of switch element (8) remains in a "P1" position.

9. Electrical switching method for initializing secondary systems in vehicles, according to claim 7 and 8, **CHARACTERIZED by** the fact that the status signal (4) is associated to stability and working of at least one second generator unit (3).

10. Electrical switching method for initializing secondary systems in vehicles, according to claim 7 and 8, **CHARACTERIZED by** the fact that the status signal (4) is associated with a timer.
